# EUROPÄISCHE PATENTANMELDUNG

(11) **EP 2 743 572 A1**
(43) Veröffentlichungstag der Anmeldung: **18.06.2014**
(21) Anmeldenummer: 12196627.9
(22) Anmeldetag: 12.12.2012
(51) Int. Cl.: F21V 8/00, F21S 8/10, G02B 6/00

(54) **Lichtleiterelement mit durch Umformung getrennt hergestellter optisch wirksamer Oberfläche**

(71) Anmelder: Odelo GmbH, 71409 Schwaikheim (DE)
(72) Erfinder: Schwegler, Veit, 70372 Stuttgart (DE)
(74) Vertreter: Benninger, Johannes

(57) **Zusammenfassung**

Es werden ein Lichtleiterelement (01), ein Verfahren zu dessen Herstellung, ein ein solches Lichtleiterelement (01) umfassendes Leuchtmittel (12) sowie eine Kraftfahrzeugleuchte umfassend ein Leuchtmittel (12) mit einem solchen Lichtleiterelement (01) beschrieben. Das Lichtleiterelement (01) ist mit jeweils einer oder mehreren durch eigens hierfür vorgesehene optisch wirksame Oberflächen (05) gebildeten Lichteinkoppelflächen (02) und Lichtaustrittsflächen (03) sowie gegebenenfalls einer oder mehreren Lichtaustrittsflächen (03) zugeordneten Lichtumlenkflächen (04) versehen. Wenigstens eine optisch wirksame Oberfläche (05) und/oder ein Teil einer solchen ist auf einer Oberfläche (07, 10) wenigstens eines stoffschlüssig mit einer verbleibenden Partie (08) des Lichtleiterelements (01) verbundenen Substrats (09) ausgebildet. Die wenigstens eine optisch wirksame Oberfläche (05) des Lichtleiterelements (01) bildende Oberfläche (07, 10) des Substrats (09) durch Umformung des Substrats (09) hergestellt.

## Beschreibung

Die Erfindung betrifft ein vorzugsweise für eine Kraftfahrzeugleuchte vorgesehenes Lichtleiterelement gemäß dem Oberbegriff des Anspruchs 1, ein Verfahren zur Herstellung eines solchen Lichtleiterelements gemäß dem Oberbegriff des Anspruchs 6, sowie ein mindestens ein solches Lichtleiterelement umfassendes, bevorzugt zur Erfüllung einer Lichtfunktion einer Kraftfahrzeugleuchte vorgesehenes Leuchtmittel gemäß dem Oberbegriff des Anspruchs 12 und eine Kraftfahrzeugleuchte mit einem solchen Lichtleiterelement gemäß dem Oberbegriff des Anspruchs 15.

Jede Kraftfahrzeugleuchte erfüllt je nach Ausgestaltung eine oder mehrere Aufgaben bzw. Funktionen, zu deren Erfüllung je mindestens eine Lichtfunktion der Kraftfahrzeugleuchte vorgesehen ist. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Kraftfahrzeugs bei Tag und/oder Nacht, wie etwa bei einer Ausgestaltung als Heckleuchte oder Tagfahrleuchte. Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest.

Beispiele für Kraftfahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine denkbare und in Heckleuchten verwirklichte Kombination zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Eine Kraftfahrzeugleuchte umfasst im Wesentlichen einen von einem Leuchtengehäuse und einer Lichtscheibe umschlossenen Leuchteninnenraum und mindestens ein darin beherbergtes, mindestens eine Lichtquelle umfassendes Leuchtmittel für wenigstens eine Lichtfunktion der Kraftfahrzeugleuchte.

Als Lichtquellen kommen in Kraftfahrzeugleuchten unter anderem wegen ihres geringen Stromverbrauchs und geringen Bauraumbedarfs vermehrt Leuchtdioden zum Einsatz. Diese bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Kraftfahrzeugleuchten bekannt, in denen reine LED-Chips ohne angeformte Primäroptiken zum Einsatz kommen. Im Folgenden wird deshalb der Einfachheit halber nicht mehr zwischen Leuchtdiode und LED-Chip unterschieden und statt dessen einheitlich der Begriff LED stellvertretend für beide Ausgestaltungen verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Dadurch und unter anderem auch wegen ihrer kompakteren Abmessungen können durch Verwendung von LEDs als Lichtquelle von Leuchtmitteln besonders kompakte Kraftfahrzeugleuchten verwirklicht werden, die an fast jede nur erdenkliche Einbausituation angepasst sein können.

Wenigstens einer Lichtquelle des Leuchtmittels können ein oder mehrere zur Ausformung einer beispielsweise gesetzlich vorgegebenen Lichtverteilung beitragende Optikelemente zur Lichtlenkung zugeordnet sein.

Die Lichtscheibe ist durch eine heutzutage meist aus einem Kunststoff hergestellte, transparente Abdeckung gebildet, welche den Leuchteninnenraum abschließt und die darin beherbergten Bauteile, wie etwa ein oder mehrere Leuchtmittel, Reflektoren sowie alternativ oder zusätzlich vorgesehene Optikelemente gegen Witterungseinflüsse schützt.

Das Leuchtengehäuse bzw. der Leuchteninnenraum kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche und/oder jede Kammer eine andere Lichtfunktionen erfüllen kann.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe angeordnete Optikscheiben oder dergleichen handeln.

Beispielsweise kann in dem Leuchteninnenraum mindestens ein hinter wenigstens einer Lichtquelle zumindest eines Leuchtmittels angeordneter Reflektor untergebracht sein. Der Reflektor kann zumindest zum Teil durch ein separates Bauteil und/oder durch wenigstens einen Teil des Leuchtengehäuses selbst gebildet sein, beispielsweise vermittels einer zumindest teilweisen, reflektierenden Beschichtung.

Die Lichtscheibe selbst kann alternativ oder zusätzlich als ein Optikelement ausgebildet sein, beispielsweise indem sie vorzugsweise an deren Innenseite mit einer zur Erzeugung einer oder mehrerer zuvor erwähnter gesetzlich vorgegebener Lichtverteilungen beitragenden optischen Struktur versehen ist. Hierdurch kann gegebenenfalls auf eine Optikscheibe verzichtet werden.

Jedes Optikelement, selbst Lichtquellen, beispielsweise der Primäroptikkörper einer LED oder der Glaskolben einer Gasentladungs- oder Glühlampe, ebenso wie beispielsweise eine plan ausgeführte Lichtscheibe bilden und/oder verfügen über optisch wirksame Oberflächen, die den Strahlengang des Lichts von dessen Entstehung am Ort der Lichtemission bis zum Verlassen der Kraftfahrzeugleuchte beeinflussen. Optisch wirksame Oberflächen, an denen ein optischer Übergang zwischen Medien mit unterschiedlichem optischem Brechungsindex stattfinden, werden hierbei als optische Grenzflächen bezeichnet.

Dabei trägt jedes Optikelement, jede optische Grenzfläche sowie jede andere optisch wirksame Oberfläche im Strahlengang des Lichts einer Lichtfunktion vom Ort der Lichtemission bis zum Verlassen durch die Lichtscheibe der Kraftfahrzeugleuchte derart ihren Teil zur Einhaltung einer erwünschten und/oder beispielsweise gesetzlich vorgegebenen Lichtverteilung bei, dass am Ende, wenn das Licht nach dem Passieren der Lichtscheibe die Kraftfahrzeugleuchte verlassen hat, die entsprechende Lichtverteilung der entsprechenden Lichtfunktion erfüllt wird, unabhängig davon, ob ein mehr oder minder großer Teil des hierbei aufgewandten Lichts abweichend von der vorgegebenen Lichtverteilung aus der Kraftfahrzeugleuchte austritt.

Anstelle von oder zusätzlich zu einem oder mehreren der erwähnten Optikelemente werden in Kraftfahrzeugleuchten zunehmend unter dem Begriff Lichtleiterelement zusammengefasste Lichtleiter und/oder lichtleitende Optikkörper zur Lichtlenkung eingesetzt, beispielsweise weil diese eine für einen Betrachter verborgene Anordnung der Lichtquelle ermöglichen.

Ein Lichtleiterelement besteht aus mindestens einer Lichteinkoppelpartie sowie mindestens einer Lichtauskoppelpartie. Die Lichtführung innerhalb des Lichtleiterelements erfolgt quasi verlustfrei vermittels Totalreflexion (TIR; Total Internal Reflexion). Unter anderem kann hierdurch zumindest zum Teil auf andere Optikelemente verzichtet werden. Beim zur Herstellung von Lichtleiterelementen verwendeten Material handelt es sich überwiegend um transparente Kunststoffe. Die Herstellung der Lichtleiterelemente kann dadurch kostengünstig und automatisiert im Spritzguss erfolgen.

Die Lichteinkoppelpartie umfasst wenigstens eine zur Lichteinkopplung von mindestens einer Lichtquelle zumindest eines Leuchtmittels vorgesehene Lichteinkoppelfläche.

Die Lichtauskoppelpartie umfasst mindestens eine zur Lichtauskopplung des in das Lichtleiterelement eingekoppelten Lichts vorgesehene, vorzugsweise auf der Lichtleitervorderseite angeordnete, von der Lichteinkoppelfläche verschiedene Lichtaustrittsfläche, sowie gegebenenfalls mindestens eine wenigstens einer Lichtaustrittsfläche zugeordnete, von dieser zugeordneten Lichtaustrittsfläche verschiedene, beispielsweise auf der Lichtleiterrückseite gegenüber der Lichtaustrittsfläche angeordnete Lichtumlenkfläche.

Zumindest die Lichteinkoppelfläche, die Lichtaustrittsfläche sowie die gegebenenfalls vorgesehene Lichtumlenkfläche stellen dabei optisch wirksame Oberflächen des Lichtleiterelements dar. Bei der Lichteinkoppelfläche und der Lichtaustrittsfläche handelt es sich hierbei um optische Grenzflächen als optisch wirksame Oberflächen. Bei den verbleibenden Oberflächen des Lichtleiterelements kann es sich ebenfalls um optisch wirksame Oberflächen handeln, sofern diese frei von einer unerwünschten Lichtauskopplung durch Totalreflexion zur Lichtführung beitragen.

Damit das in ein Lichtleiterelement eingekoppelte Licht einer beispielsweise gesetzlich vorgegebenen Lichtverteilung genügend oder beitragend via der Lichtaustrittsfläche wieder austreten kann, kann die Lichtaustrittsfläche und/oder eine gegebenenfalls vorgesehene Lichtumlenkfläche mit Lichtauskoppelstrukturen versehen sein. An der Lichtaustrittsfläche angeordnete Lichtauskoppelstrukturen stehen dabei unter einem Winkel zum in das Lichtleiterelement eingekoppelten Licht, bei dem keine Totalreflexion stattfindet und das Licht gegebenenfalls unter Brechung beim Übergang vom Material des Lichtleiterelements zum dieses umgebenden Medium in einer oder mehreren, einer vorgegebenen Lichtverteilung genügenden oder beitragenden Richtungen aus der Lichtaustrittsfläche austritt. Alternativ oder zusätzlich an einer Lichtumlenkfläche vorgesehene Lichtauskoppelstrukturen hingegen lenken das in das Lichtleiterelement eingekoppelte Licht unter einem Winkel zur Lichtaustrittsfläche hin, bei dem an dieser keine Totalreflexion mehr stattfindet, so dass das Licht den Übergang zwischen dem Material des Lichtleiterelements und dem dieses umgebenden Medium im Bereich der Lichtaustrittsfläche passieren kann. Bei dieser Passage tritt das Licht wiederum gegebenenfalls unter Brechung beim Übergang vom Material des Lichtleiterelements zum dieses umgebenden Medium in einer oder mehreren, einer vorgegebenen Lichtverteilung genügenden oder beitragenden Richtungen aus der Lichtaustrittsfläche aus.

Dabei können eine oder mehrere Lichtaustrittsflächen und/oder eine oder mehrere gegebenenfalls vorgesehene, einer oder mehreren Lichtaustrittsflächen zugeordnete Lichtumlenkflächen mit Lichtauskoppelstrukturen und/oder frei von Lichtauskoppelstrukturen ausgeführt sein.

Diese Lichtauskoppelstrukturen können beispielsweise eine Prismenstruktur umfassen, bestehend aus mehreren Prismenelementen als Lichtauskoppelemente.

Das Lichtleiterelement kann beispielsweise stabförmig als so genanntes Stablichtleiterelement und/oder flächig als so genanntes Flächenlichtleiterelement ausgebildet sein, mit einer oder mehreren, auf seiner beispielsweise in Richtung einer Hauptabstrahlrichtung orientierten Vorderseite angeordneten Lichtaustrittsflächen.

Ein Lichtleiterelement, in das Licht mindestens einer Lichtquelle an mindestens einer Lichteinkoppelfläche ein- und an mindestens einer von der Lichteinkoppelfläche verschiedenen Lichtaustrittsfläche wieder ausgekoppelt wird, kann dabei als ein separates Bauteil beispielsweise im Leuchteninnenraum einer Kraftfahrzeugleuchte beherbergt oder Teil eines Leuchtmittels sein.

Beispielsweise kann ein Leuchtmittel einen oder mehrere Lichtleiter sowie eine oder mehrere, das von ihnen ausgestrahlte Licht zumindest zum Teil in den wenigstens einen Lichtleiter einkoppelnde Lichtquellen umfassen.

Als zur Einkopplung von Licht in ein oder mehrere Lichtleiterelemente vorgesehene Lichtquellen werden bevorzugt LEDs vorgesehen. Bei der Kombination von Lichtleiterelementen und LEDs können je ein Lichtleiterelement je LED, mehrere LEDs je Lichtleiterelement oder mehrere Lichtleiterelemente je LED zum Einsatz kommen.

Ein Lichtleiterelement eines solchen Leuchtmittels kann beispielsweise als Primäroptik einer oder mehrerer LEDs dienen bzw. als eine solche Primäroptik ausgebildet sein, beispielsweise indem das Lichtleiterelement direkt mit seiner mindestens einen Lichteinkoppelfläche an eine oder mehrere LEDs angespritzt ist.

Ein bereits zuvor angeschnittenes Problem bei der Erfüllung der Vorgaben einer beispielsweise gesetzlich vorgegebenen Lichtverteilung einer Lichtfunktion einer Kraftfahrzeugleuchte mittels der bekannten Optikelemente einschließlich der bekannten Lichtleiterelemente ist eine nur eingeschränkte optische Güte. Dies ist dadurch bedingt, dass zur Erfüllung einer vorgegebenen Lichtverteilung ein mehr oder minder großer Teil des für eine Lichtfunktion aufgewandten Lichts abweichend von der vorgegebenen Lichtverteilung aus der Kraftfahrzeugleuchte austritt. Eine Ursache hierfür ist, dass die ein Verhältnis des in einer gewünschten Lichtverteilung aus einer Kraftfahrzeugleuchte austretenden und einer Lichtfunktion zugeordneten Lichts zu dem von der oder den zur Erfüllung der Lichtfunktion vorgesehenen Lichtquellen ausgestrahlten Lichts widerspiegelnde optische Güte unter Anderem abhängig ist von:
- der Genauigkeit der relativen Ausrichtung der zur Erzeugung der gewünschten Lichtverteilung benötigten, im Strahlengang von der mindestens einen Lichtquelle bis zum Austritt aus der Kraftfahrzeugleuchte durch die Lichtscheibe hindurch angeordneten Optikelemente. Die optische Güte ist beispielsweise um so geringer, je ungenauer die zur Erzielung der gewünschten Lichtverteilung benötigten Bauteile beginnend bei der Lichtquelle relativ zueinander ausgerichtet sind.
- der Präzision sämtlicher im Strahlengang vom Ort der Lichtemission bis zum Verlassen der Lichtscheibe optisch wirksamen Oberflächen, einschließlich optischer Grenzflächen, wie etwa der Oberflächenbeschaffenheit der erwähnten Optikelemente und/oder der Lichtquelle selbst. So trägt die Qualität beispielsweise der Oberflächen der Lichtaustritts- und der gegebenenfalls vorgesehenen Lichtumlenkflächen eines Lichtleiterelements wesentlich zur optischen Güte bei, weil das in ein Lichtleiterelement eingekoppelte Licht um so genauer einer vorgegebeben Lichtverteilung beitragend wieder aus dem Lichtleiterelement austritt, je präziser diese Oberflächen beschaffen sind.

Einen Einfluss auf die optische Güte hat damit auch die Anzahl an optischen Übergängen im Strahlengang zwischen Medien mit unterschiedlichem optischem Brechungsindex.

Bedingt durch Abweichungen von einer theoretischen, optimalen Anordnung und Ausgestaltung aller Optikelemente einschließlich Lichtleiterelemente sowie aller optisch wirksamen Oberflächen einschließlich optischer Grenzflächen muss damit ein wesentlich höherer Lichtstrom aufgewandt werden, als einer beispielsweise gesetzlich vorgegebenen Lichtverteilung entsprechend aus einer Kraftfahrzeugleuchte austritt. Dabei verschlechtert sich die optische Güte, je mehr Licht abweichend von einer erwünschten oder erforderlichen, beispielsweise gesetzlich vorgegebenen Lichtverteilung verloren geht. Dies hat einerseits einen hohen Bauraumbedarf zur Folge, zieht andererseits aufgrund der hierfür erforderlichen stärkeren und/oder mehreren Lichtquellen höhere Kosten nach sich und führt außerdem zu einem unnötig hohen Stromverbrauch einhergehend mit einer stärkeren Belastung und damit Auslegung des Bordnetzes eines Kraftfahrzeugs.

Mit Lichtleiterelementen kann im Vergleich zu mehreren einzeln oder gruppenweise im Leuchteninnenraum montierten Optikelementen eine Verbesserung der optische Güte erhalten werden.

So ist beispielsweise zum Erhalt einer hohen optischen Güte durch DE 10 2006 034 070 A1 und durch EP 1 881 258 A1 bekannt, einen eine definierte Abstrahlcharakteristik erzeugenden Lichtverteilkörper als Primäroptik unmittelbar an eine LED anzuspritzen, wodurch einerseits eine genaue Ausrichtung von LED und Lichtverteilkörper und andererseits eine Verringerung der Anzahl optischer Grenzflächen erhalten wird.

Die optische Güte von Lichtleiterelementen ist jedoch herstellungsbedingt nach wie vor eingeschränkt. Dies liegt vor allem daran, dass die maximal zu erhaltende Qualität der optisch wirksamen Oberflächen einschließlich optischer Grenzflächen eines Lichtleiterelements abhängig ist von der im für die Herstellung des Lichtleiterelements vorgesehenen Spritzgusswerkzeug erzeugbaren Oberflächengüte. Diese Oberflächengüte ist beschränkt durch die zur Erzeugung des Spritzgusswerkzeugs verwendbaren Werkzeuge. Bei diesen Werkzeugen handelt es sich vor allem um Fräswerkzeuge, die bei noch so genauem Einsatz eine zumindest mikroskopische Oberflächenstrukturierung hinterlassen. Diese mikroskopische Oberflächenstrukturierung legt die maximal zu erhaltende Qualität der optisch wirksamen Oberflächen eines im Spritzgussverfahren hergestellten Lichtleiterelements fest, unabhängig davon, ob die optisch wirksame Oberfläche und/oder optische Grenzfläche mit Lichtauskoppelstrukturen und/oder frei von Lichtauskoppelstrukturen ausgeführt ist.

Durch DE 195 07 901 A1 ist bekannt, ein Stablichtleiterelement mit einer optisch beabstandeten Umhüllung zumindest teilweise zu umgeben. Ein- oder beidseitig an den Stirnseiten eingekoppeltes Licht, welches durch den die beiden Stirnseiten verbindenden Mantel des Stablichtleiterelements entlang diesem austritt, wird durch die Umhüllung teils wieder zum Mantel zurück reflektiert und teils durch die Umhüllung hindurch abgestrahlt. Die Umhüllung kann mit einer Lichtleiterfolie mit prismatischen Riefen längs einer sich zwischen den beiden Stirnseiten des Stablichtleiterelements erstreckenden Lichtleiterachse oder mit außenverzahnten Röhren ähnlicher Geometrie ausgeführt sein.

Durch DE 10 2006 060 409 A1 sind ein Lichtleiterelement und ein Verfahren zu dessen Herstellung bekannt. Das Lichtleiterelement besteht aus einem Grundkörper mit senkrecht oder parallel zueinander angeordneter Lichteinkoppelfläche und Lichtaustrittsfläche sowie auf der Lichtaustrittsfläche angeordneten Lichtauskoppelementen. Das Herstellungsverfahren sieht vor, die Lichtauskoppelemente auf eine Folie separat vom Grundkörper aufzutragen. Das Auftragen der Auskoppelelemente auf die Folie erfolgt durch Aufdrucken bevorzugt im Tintenstrahldruck mit einer Auflösung von 1200 bis 1440 dpi. Die Auskoppelelemente sind dabei aus einem getrockneten Beschichtungsmaterial gebildet und können farbig ausgebildet sein. Die Folie mit den Auskoppelelementen wird nachfolgend auf dem Grundkörper angeordnet, oder dient der Übertragung der Auskoppelelemente auf den Grundkörper, wobei die Folie nach der Übertragung der Auskoppelelemente auf den Grundkörper abgelöst wird. Damit sind die Auskoppelelemente durch die Folie von der Lichtaustrittsfläche beabstandet oder stehen in direktem Kontakt mit der Lichtaustrittsfläche. Eine thermomechanische Fixierung, im ersten Fall der Folie, im zweiten Fall der Auskoppelelemente, kann der haftvermittlerfreien Befestigung auf dem Grundkörper dienen. Die thermomechanische Fixierung erfolgt durch Erwärmung der Folie vor dem Anpressen auf den Grundkörper oder durch Anordnen auf dem Grundkörper und anschließendes Anpressen mit einer geheizten Platte. Die Auskoppelelemente sind vor dem Anordnen auf dem Grundkörper im Querschnitt kreisförmig, danach können sie zusammengedrückt sein, wobei sie eine ovale Form im Querschnitt einnehmen.

Durch DE 10 2009 041 243 A1 und durch DE 10 2009 041 244 A1 sind zum Herstellen von Formkörpern das so genannte In-Mold-Labeling (IML) und In-Mold-Decoration (IMD) bekannt. Mit diesen Verfahren werden in einem Spritzgießwerkzeug mehrschichtige Strukturen geschaffen. Sie umfassen Prozesse, bei denen flächige, ebene oder bereits geformte, oder strukturierte Substrate, wie etwa Folien, mit einer Materialmasse, zum Beispiel mit Kunststoff, metall- oder glashaltigen Materialien hinterspritzt oder hinterschäumt werden. Vorgeformte Folien, beispielsweise aus Kunststoff, wie Polycarbonat, oder Holzfurnier erhalten vor der Hinterspritzung die gewünschte endgültige dreidimensionale Form in einem Verformungsprozess und können zumindest teilweise bedruckt sein. Zur Herstellung einer Gerätefront mit hinterleuchteten Bedienmitteln ist dabei die Verwendung eines vorgefertigten Folieneinlegers vorgesehen, der transparent, kratzfest, lichtstabil und teilweise bedruckt ist, stabile Randgebiete hat, bereits die endgültige Oberflächenform der Gerätefront festlegt, eine lichtdurchlässige Schicht aufweist, die als Lichtleiter ausgeführt ist, sowie eine lichtundurchlässige Schicht aufweist, die durch ihre Materialeigenschaften und Gestaltung den unkontrollierten Austritt von Nebenlicht an beleuchteten bzw. hinterleuchteten Bereichen der Gerätefront verhindert. Zur Herstellung eines be- bzw. hinterleuchteten Bedienelements kann der Folieneinleger dreidimensional geformt sein.

Beim IML-Verfahren handelt es sich um ein Spritzgussverfahren, bei dem in das Spritzgusswerkzeug eingelegte Substrate wie Stoff, Papier, Furniere oder beliebig bedruckte oder strukturierte Folien hinterspritzt werden. Beim IMD-Verfahren wird die Folie im Gegensatz zum IML-Verfahren nicht in das Spritzgusswerkzeug eingelegt, sondern als ein Folienband z.B. motorisch durch das Spritzgusswerkzeug hindurch gerollt. Durch Sensoren werden die einzelnen Grafiken positioniert. Dieses Verfahren weist eine wesentlich bessere Qualität als das IML-Verfahren auf.

Der Erfindung liegt die Aufgabe zu Grunde, ein Lichtleiterelement sowie ein Verfahren zu dessen Herstellung anzugeben, mit denen die Beschränkungen des Standes der Technik aufgehoben werden und eine höhere optische Güte erzielt werden kann. Ferner ist es Aufgabe der Erfindung ein wenigstens ein solches Lichtleiterelement und mindestens eine Lichtquelle umfassendes Leuchtmittel anzugeben.

Die Aufgabe wird jeweils gelöst mit den Merkmalen der unabhängigen Ansprüche.

Ein erster Gegenstand der Erfindung betrifft demnach ein beispielsweise stabförmiges, vorzugsweise beispielsweise in einer Ebene und/oder besonders bevorzugt dreidimensional im Raum gekrümmt verlaufendes Lichtleiterelement mit mindestens einer Lichteinkoppelfläche sowie mindestens einer von der wenigstens einen Lichteinkoppelfläche verschiedenen Lichtaustrittsfläche. Darüber hinaus kann das Lichtleiterelement wenigstens eine von der zumindest einen Lichtaustrittsfläche verschiedene Lichtumlenkfläche aufweisen, welche im Lichtleiterelement geführtes Licht innerhalb des Lichtleiterelements gezielt in einer oder mehreren Richtungen zu wenigstens einer Lichtaustrittsfläche hin umlenkt, so dass das Licht an der entsprechenden, zumindest einen Lichtaustrittsfläche gegebenenfalls unter Brechung beim Übergang vom Material des Lichtleiterelements zum umgebenden Medium, beispielsweise zur umgebenden Luft, oder frei von Brechung aus dem Lichtleiterelement ausgekoppelt wird.

Zumindest die mindestens eine Lichteinkoppelfläche, die wenigstens eine Lichtaustrittsfläche sowie die mindestens eine gegebenenfalls vorgesehene Lichtumlenkfläche bilden optisch wirksame Oberflächen und/oder optische Grenzflächen des Lichtleiterelements im Sinne der einleitenden Definitionen. Der Ausdruck «zumindest» ist dabei so zu verstehen, dass auch eine oder mehrere verbleibende Oberflächen des Lichtleiterelements optisch wirksame Oberflächen bilden können, sofern diese frei von einer unerwünschten Lichtauskopplung durch Totalreflexion zur Lichtführung im Lichtleiterelement beitragen.

Wenigstens eine optisch wirksame Oberfläche und/oder optische Grenzfläche und/oder ein Teil einer solchen ist auf einem stoffschlüssig mit einer verbleibenden Partie des Lichtleiterelements verbundenen Substrat ausgebildet.

Die auf dem Substrat ausgebildete optisch wirksame Oberfläche ist dabei durch Umformen getrennt von einer verbleibenden Partie des Lichtleiterelements hergestellt.

Das Substrat kann ein Foliensubstrat, besonders bevorzugt eine Folie umfassen. Alternativ oder zusätzlich kann das Substrat ein Gewebe umfassen.

Das Substrat kann zumindest teilweise ausgestanzt sein. Hierdurch können auf einfache Weise Oberflächenpartien des Lichtleiterelements frei von entsprechend durch eine oder mehrere durch Umformen hergestellte Oberflächen des Substrats gebildete optisch wirksame Oberflächen gehalten werden.

Die wenigstens eine optisch wirksame Oberfläche des Lichtleiterelements bildende Oberfläche des Substrats ist durch Umformung, bevorzugt durch Walzen und/oder Pressen und/oder Prägen des Substrats hergestellt.

In der Einteilung der Fertigungsverfahren nach DIN 8580 ist Umformen der Überbegriff der zweiten Hauptgruppe und steht neben Fertigungsverfahren wie Urformen, Trennen, Fügen, Beschichten und Stoffeigenschaft ändern.

Durch Walzen und/oder Pressen und/oder Prägen wird eine wesentlich höhere Oberflächengüte erhalten, als beispielsweise durch Spritzguss und/oder Bedrucken, wie dies an nachfolgender Stelle ausführlich erläutert wird.

Das Substrat, ebenso wie dessen durch Umformung hergestellte, eine optisch wirksame Oberfläche des Lichtleiterelements bildende Oberfläche, ist bevorzugt transparent.

Die auf dem Substrat ausgebildete optisch wirksame Oberfläche des Lichtleiterelements bildet vorzugsweise zumindest einen Teil einer:
- Lichteinkoppelfläche und/oder
- Lichtaustrittsfläche und/oder
- Lichtumlenkfläche
des Lichtleiterelements im Sinne der einleitenden Definitionen.

Die auf dem Substrat ausgebildete optisch wirksame Oberfläche kann zumindest abschnittsweise mit Lichtauskoppelstrukturen und/oder abschnittsweise frei von Lichtauskoppelstrukturen ausgeführt sein.

Das Substrat kann abschnittsweise mit einer Beschichtung versehen sein, um in solchen Abschnitten, die keine optisch wirksame Oberfläche und/oder zumindest keine optische Grenzfläche bilden, einen Lichtaustritt aus dem Lichtleiterelement vollständig zu unterbinden.

Die Beschichtung kann durch Bedrucken und/oder Metallisieren hergestellt sein.

Im Gegensatz zum Umformen stellt das Bedrucken bzw. Aufdrucken z.B. einer den Lichtaustritt beschränkenden Schablone ein Beschichtungsverfahren dar.

Das Substrat ist vorzugsweise frei von Luftspalten und/oder Einschlüssen stoffschlüssig mit der verbleibenden Partie des Lichtleiterelements verbunden.

Ein zweiter Gegenstand der Erfindung betrifft ein Verfahren zur Herstellung eines zuvor beschriebenen Lichtleiterelements umfassend zumindest eine auf wenigstens einem stoffschlüssig mit einer verbleibenden Partie des Lichtleiterelements verbundenen Substrat ausgebildeten optisch wirksamen Oberfläche und/oder optische Grenzfläche. Das Verfahren umfasst die Verfahrensschritte:
- Bereitstellung des bevorzugt transparenten Substrats,
- Behandlung wenigstens einer Oberfläche des Substrats durch Umformung des Substrats, vorzugsweise vermittels Walzen und/oder Pressen und/oder Prägen,
- stoffschlüssiges Verbinden des Substrats, bevorzugt mit dessen gegebenenfalls unbehandelt verbliebener Oberfläche, sofern nur eine Oberfläche im vorherigen Verfahrensschritt behandelt wurde, mit der verbleibenden Partie des Lichtleiterelements.

Bevorzugt weist das Substrat in seiner flächigen Ausdehnung wesentlich größere Abmessungen auf, als normal hierzu. Ein solches Substrat kann als zweidimensional bezeichnet werden, da es als nennenswerte Oberflächen nur eine Oberseite und Unterseite aufweist. Die Oberseite und Unterseite verbindende Schmalseiten weisen hierbei keine nennenswerte Abmessungen auf, wie dies beispielsweise bei dünnen Platten und Folien der Fall ist.

Durch die Behandlung vermittels Umformen kann die als optisch wirksame Oberfläche und/oder optische Grenzfläche des Lichtleiterelements vorgesehene Oberfläche des Substrats bei Bedarf zumindest abschnittsweise mit Lichtauskoppelstrukturen versehen werden.

Beispielsweise können bei der Behandlung der nach dem stoffschlüssigen Verbinden mindestens eine optisch wirksame Oberfläche des Lichtleiterelements bildenden Oberfläche des Substrats durch Umformen zumindest abschnittsweise Lichtauskoppelstrukturen auf die behandelte Oberfläche geprägt werden.

Gegebenenfalls vorgesehene Lichtauskoppelstrukturen sind dabei in Negativform auf dem oder den zur Umformung des Substrats vorgesehenen Umformwerkzeugen aufgebracht. Dabei sind für auf der optisch wirksamen Oberfläche vorgesehene Erhebungen Vertiefungen am Umformwerkzeug vorgesehen und entsprechend für auf der optisch wirksamen Oberfläche vorgesehene Vertiefungen Erhebungen am Umformwerkzeug vorgesehen.

Die Oberflächengüte bzw. Beschaffenheit der Oberfläche des Substrats, welche nach dem stoffschlüssigen Verbinden mit der verbleibenden Partie des Lichtleiterelements eine auf dem Substrat ausgebildete optisch wirksame Oberfläche und/oder optische Grenzfläche des Lichtleiterelements bildet, einschließlich deren gegebenenfalls vorgesehener Lichtauskoppelstrukturen, wird dabei durch die Behandlung vermittels Umformung des Substrats erhalten.

Bei der Umformung des Substrats zur Erzeugung der Beschaffenheit und Oberflächengüte der zunächst auf dem Substrat ausgebildeten Oberfläche, welche, durch stoffschlüssige Verbindung mit der verbleibenden Partie des Lichtleiterelements, zu einer optisch wirksamen Oberfläche des Lichtleiterelements wird, kommt bevorzugt Druckumformung, besonders bevorzugt Walzen und/oder Pressen und/oder Prägen zum Einsatz.

Durch das Umformen bevorzugt vermittels Walzen und/oder Pressen und/oder Prägen wird eine wesentlich höhere, das heißt feinere Oberflächengüte erhalten, als dies beispielsweise durch Spritzguss und/oder Bedrucken überhaupt möglich ist. Dies ist unter anderem dadurch bedingt, dass die Oberflächengüte der für die Umformung vorgesehenen Werkzeuge nicht derart beschränkt ist, wie diejenige eines Spritzgusswerkzeugs oder die Auflösung eines Tintenstrahldruckers. So sind die leicht zugänglichen, da beispielsweise konvexen Oberflächen von beispielsweise für das Walzen vorgesehenen Walzen bei deren Herstellung leicht zugänglich und können dadurch in einer wesentlich feineren Beschaffenheit ausgeführt werden, als die in einer Vertiefung liegenden Oberflächen eines Spritzgusswerkzeugs. Diese wesentlich feinere Beschaffenheit des Umformwerkzeugs oder der Umformwerkzeuge wird beim Umformen direkt auf die Oberfläche des Substrats übertragen. Hierdurch erhält die nach dem stoffschlüssigen Verbinden mit der verbleibenden Partie des Lichtleiterelements mindestens eine optisch wirksame Oberfläche und/oder optische Grenzfläche des Lichtleiterelements bildende Oberfläche des so umgeformten Substrats eine wesentlich präzisere Mikrostrukturierung, die von völlig glatt bis zu einer präzise vorgegebenen Geometrie von Lichtauskoppelstrukturen reichen kann.

Insbesondere bei der Verwendung von Walzen und/oder Pressen für das Umformen können darüber hinaus Lichtauskoppelstrukturen verwirklicht werden, wie sie bislang im Spritzguss nicht verwirklicht werden können. So können im Spritzgusswerkzeug bislang nur durchgängige Riefen als Lichtauskoppelstrukturen vorgesehen werden, weil zu wenig Platz im Spritzgusswerkzeug vorhanden ist, um beispielsweise einen Fräser über die Breite eines Stablichtleiterelements mehrfach ein- und wieder auszutauchen. Bei der Druckumformung vermittels Walzen und/oder Pressen verhält sich dies anders. Die hierfür vorgesehenen Walzen bzw. eine oder mehrere Pressen können beispielsweise in ihrer Erhabenheit beliebig fein bearbeitet werden, da deren konvexe, auf das Substrat einwirkende Oberfläche frei zugänglich ist, wodurch es zu keiner Einschränkung der minimal ausführbaren Fein- und Mikrostruktur kommt.

Das stoffschlüssige Verbinden erfolgt vorzugsweise frei von Lufteinschlüssen und/oder Einschlüssen.

Das stoffschlüssige Verbinden des Substrats mit der verbleibenden Partie des Lichtleiterelements kann durch Hinterspritzung des Substrats mit der verbleibenden Partie des Lichtleiterelements erfolgen.

Hierzu können die Verfahrensschritte:
- lage- und positionsrichtiges Einbringen des Substrats in ein Spritzgusswerkzeug, und
- Hinterspritzen des Substrats
vorgesehen sein.

Alternativ kann das stoffschlüssige Verbinden durch Auflaminieren oder Aufkleben des Substrats, gegebenenfalls mit dessen unbehandelter Oberfläche, sofern nur eine Oberfläche im vorherigen Verfahrensschritt behandelt wurde, auf die verbleibende, beispielsweise in einem separaten Spritzgussprozess hergestellte Partie des Lichtleiterelements erfolgen.

Ebenfalls denkbar ist eine thermomechanische Fixierung, um das Substrat mit der verbleibenden Partie des Lichtleiterelements stoffschlüssig zu verbinden. Die thermomechanische Fixierung erfolgt vorzugsweise durch Erwärmung vorzugsweise der mit der verbleibenden Partie des Lichtleiterelements zu verbindenden Oberfläche des Substrats vor dem Anpressen auf die verbleibende Partie des Lichtleiterelements.

Das Substrat kann im Spritzgusswerkzeug und/oder während des Auflaminierens und/oder während des Klebens vorzugsweise mittels Vakuum festgehalten werden.

Das stoffschlüssige Verbinden erfolgt dabei derart, dass das Substrat mit seiner durch Umformung hergestellten Oberfläche an derjenigen bzw. denjenigen Stellen zu liegen kommt, an der bzw. an denen eine oder mehrere optisch wirksame Oberflächen und/oder optische Grenzflächen des fertigen Lichtleiterelements vorgesehen sind.

Das Substrat kann dabei derart positioniert werden, dass dessen durch Umformung behandelte Oberfläche zumindest einen Teil wenigstens einer:
- Lichteinkoppelfläche und/oder
- Lichtaustrittsfläche und/oder
- Lichtumlenkfläche
des Lichtleiterelements bildet.

Das Substrat kann zumindest abschnittsweise ausgestanzt werden.

Das Substrat kann abschnittsweise mit einer Beschichtung versehen sein, um in solchen Abschnitten, die keine optisch wirksame Oberfläche bilden, einen Lichtaustritt aus dem Lichtleiterelement vollständig zu unterbinden.

Die Beschichtung kann durch Bedrucken und/oder Metallisieren hergestellt sein.

Eine oder mehrere Oberflächenpartien eines oder mehrerer bei der Behandlung des Substrats zumindest eine Oberfläche des Substrats umformenden Umformungswerkzeuge können wärmebeaufschlagt, beispielsweise beheizt sein. So kann beispielsweise bei einer Behandlung durch Umformung vermittels Walzen eine oder mehrere hierfür vorgesehene Walzen beheizt sein.

Alternativ oder zusätzlich kann das Substrat zumindest auf einer einer umformenden Behandlung zu unterziehenden Oberfläche wärmebeaufschlagt werden. Hierfür eignen sich beispielsweise eine Warm- bzw. Heißluftbeaufschlagung der entsprechenden mindestens einen Oberfläche des Substrats vor dem eigentlichen Umformen und/oder zwischen zwei aufeinanderfolgenden Behandlungen zur Umformung. Anstelle einer Warm- bzw. Heißluftbeaufschlagung oder zusätzlich zu einer solchen kann eine Wärmebeaufschlagung vermittels Infrarotstrahlung vorgesehen sein.

Wichtig ist hervorzuheben, dass wenn hier von einem Substrat die Rede ist, grundsätzlich auch mehrere Substrate an verschiedenen Stellen mit einer verbleibenden Partie des Lichtleiterelements verbunden sein können, von denen jedes Substrat zumindest eine optisch wirksame Oberfläche und/oder optische Grenzfläche des fertigen Lichtleiterelements bildet.

Ein dritter Gegenstand der Erfindung betrifft ein Leuchtmittel umfassend mindestens ein zuvor beschriebenes Lichtleiterelement sowie wenigstens eine zumindest einer Lichteinkoppelfläche des mindestens einen Lichtleiterelements zugeordnete Lichtquelle. In das Lichtleiterelement wird Licht der mindestens einen Lichtquelle an mindestens einer Lichteinkoppelfläche ein- und an mindestens einer von der Lichteinkoppelfläche verschiedenen Lichtaustrittsfläche wieder ausgekoppelt.

Wenigstens eine LED kann als mindestens eine Lichtquelle des Leuchtmittels vorgesehen sein.

Durch Verwendung einer punktförmigen Lichtquelle, wie sie durch eine LED verwirklicht ist, lässt sich die mit der Erfindung erzielbare optische Güte nochmals steigern, weil eine derartige Lichtquelle eine optimale Auslegung des gesamten Strahlengangs von der Lichtentstehung bis zum Verlassen des Leuchtmittels durch die Lichtaustrittsfläche des fingerförmigen Lichtleiterelements ermöglicht. Hierdurch kann das unerwünschte Austreten von Licht an anderen, als den vorgesehenen Stellen aus dem fingerförmigen Lichtleiterelement, das so genannte Lecklicht, zumindest annähernd vollständig vermieden werden, unabhängig davon, welcher Typ LED als Lichtquelle verwendet wird.

Dabei unterscheiden sich verschiedene Typen von LEDs im Wesentlichen durch deren elektrische Kontaktierung sowie dem Vorhandensein einer Kapselung und/oder einer Primäroptik, wie anhand der nachfolgenden Ausführungen deutlich wird.

Eine LED umfasst neben dem bereits Eingangs erwähnten mindestens einen LED-Chip auch mindestens ein Kontaktmittel zur elektrischen Kontaktierung des LED-Chips. Üblicherweise verfügt jede Leuchtdiode über einen Bonddraht je LED-Chip, welcher je einen LED-Chip elektrisch kontaktiert. Dieser Bonddraht bildet ein erstes Kontaktmittel für den LED-Chip der LED. Der Bonddraht kann mit einem ersten elektrischen Anschluss verbunden sein, welcher zur elektrischen Kontaktierung der LED beispielsweise mit einer ersten Leiterbahn eines Leuchtmittelträgers vorgesehen sein kann. Ein zweites Kontaktmittel für den LED-Chip der LED bildet der LED-Chip selbst. Zur elektrischen Kontaktierung kann der LED-Chip mit einem zweiten elektrischen Anschluss verbunden sein, welcher zur elektrischen Kontaktierung der LED beispielsweise mit einer zweiten Leiterbahn eines Leuchtmittelträgers vorgesehen sein kann.

Die LED kann darüber hinaus einen den LED-Chip unmittelbar umgebenden Primärreflektor aufweisen. Dieser Primärreflektor kann beispielsweise durch Wandungen einer den LED-Chip umgebenden Ausnehmung und/oder durch einen Napf gebildet sein, in dem der LED-Chip angeordnet ist. Der Napf kann mit dem erwähnten zweiten Anschluss verbunden sein, diesen bilden oder umfassen oder von diesem umfasst werden.

Bei speziellen Ausführungen von LEDs können einzelne oder alle Kontaktmittel selbst die elektrischen Anschlüsse bilden, wie nachfolgend zu den verschiedenen Kontaktierungsmöglichkeiten von LEDs ausgeführt.

Bekannt sind LEDs zur Durchsteckmontage (THT; Through Hole Technology), oberflächenmontierbare (SMD; Surface Mounted Device) LEDs und LEDs, bei denen der LED-Chip in Nacktmontagetechnik (COB; Chip On Board) direkt auf den Leuchtmittelträger gebondet wird.

THT-LEDs sind der gängig bekannte Typ LEDs. Sie werden auch als bedrahtete LEDs bezeichnet, da sie aus einer zumindest in einer gewünschten Abstrahlrichtung transparenten Kapselung, z.B. in Form einer Umspritzung oder eines Vergusses bestehen, welche einen den LED-Chip mit einem ersten elektrischen Anschluss, beispielsweise in Form eines Anodenanschlusses verbindenden Bonddraht und den mit einem zweiten elektrischen Anschluss, beispielsweise in Form eines Kathodenanschlusses, verbundenen LED-Chip einschließt. Aus der Kapselung ragen nur die auch als Beinchen bezeichneten Drähte des ersten elektrischen Anschlusses und des zweiten elektrischen Anschlusses als die Anoden- und Kathodenanschlüsse der THT-LED. Der beispielsweise als Kathodenanschluss ausgeführte zweite elektrische Anschluss kann hierbei mit einem oben erwähnten Napf versehen sein, in dem der LED-Chip angeordnet ist. Der Bonddraht führt vom beispielsweise als Anodenanschluss ausgeführten ersten Anschluss von außerhalb des Napfs kommend zum LED-Chip.

SMD-LEDs bestehen aus einem Leadframe mit wenigstens einer Bestückungsfläche für mindestens einen LED-Chip sowie elektrischen Anschlussflächen. Das Leadframe ist von einem Kunststoffkörper mit zumindest einer die wenigstens eine Bestückungsfläche freihaltenden Ausnehmung teilweise umspritzt. Die elektrischen Anschlussflächen des Leadframes sind hierbei als die elektrischen Anschlüsse der SMD-LED zur späteren Oberflächenmontage ebenfalls freigehalten. Der mindestens eine LED-Chip ist am Grund der zumindest einen zur wenigstens einen Bestückungsfläche reichenden Ausnehmung angeordnet und elektrisch kontaktiert. Dabei ist der LED-Chip auf einer mit wenigstens einer ersten elektrischen Anschlussfläche verbundenen ersten Partie des Leadframes angeordnet. Ein Bonddraht verbindet den LED-Chip mit einer zweiten Partie des Leadframes, die wiederum mit wenigstens einer zweiten elektrischen Anschlussfläche verbunden ist. Die an ihrem Grund zur Bestückungsfläche reichende Ausnehmung kann reflektorartig ausgestaltet sein. Dabei bilden die Wandungen der Ausnehmung den oben erwähnten Primärreflektor. Hierbei können die Wandungen reflektierend beschichtet sein.

COB-LEDs bestehen aus einem direkt auf einem Leuchtmittelträger anzuordnenden, ungehäusten LED-Chip und einem Bonddraht. Die Rückseite des LED-Chips bildet dabei den ersten elektrischen Anschluss der COB-LED. Zur elektrischen Kontaktierung wird der LED-Chip auf seiner Rückseite direkt mit einer ersten Leiterbahn eines Leuchtmittelträgers z.B. durch Löten oder Schweißen elektrisch verbunden. Der den zweiten elektrischen Anschluss der COB-LED bildende Bonddraht wird mit einer zweiten Leiterbahn des Leuchtmittelträgers ebenfalls z.B. durch Löten oder Schweißen elektrisch verbunden.

Der Vollständigkeit halber sei ergänzend erwähnt, dass auch andere Kontaktierungen wie z.B. der so genannte Flip-Chip-Aufbau möglich sind, bei dem die Kontaktmittel des LED-Chips direkt mit einem kontaktierten Substrat verbunden sind. In diesen Fällen wird kein Bonddraht verwendet.

Ein oder mehrere der erwähnten Leuchtmittelträger können dabei Teil des Leuchtmittels sein.

Das Lichtleiterelement und die mindestens eine LED können bevorzugt durch Spritzgießen miteinander verbunden sein. Hierbei kann das Lichtleiterelement an wenigstens eine LED angespritzt sein. In diesem Fall wird eine Lichteinkoppelfläche von der oder den jeweils an eine LED unmittelbar anstoßenden Oberflächen des Lichtleiterelements umfasst.

Hierdurch lässt sich die optische Güte des Leuchtmittels nochmals steigern, einerseits durch eine hohe Genauigkeit der gegenseitigen Ausrichtung verschiedenen Elemente des Leuchtmittels zueinander und andererseits durch eine Verringerung der Anzahl der optischen Übergänge bzw. der optischen Grenzflächen im Strahlengang des Lichts.

Ein vierter Gegenstand der Erfindung betrifft eine Kraftfahrzeugleuchte mit einem von einem Leuchtengehäuse und einer Lichtscheibe umschlossenen Leuchteninnenraum und mindestens einem in dem Leuchteninnenraum untergebrachten Leuchtmittel zur Erfüllung mindestens einer Lichtfunktion der Kraftfahrzeugleuchte. Mindestens ein im Leuchteninnenraum beherbergtes Leuchtmittel umfasst neben wenigstens einer Lichtquelle zumindest ein mit seiner wenigstens einen Lichteinkoppelfläche der wenigstens einen Lichtquelle zugeordnetes, zuvor beschriebenes Lichtleiterelement.

Die Kraftfahrzeugleuchte kann beispielsweise als Heckleuchte für ein Kraftfahrzeug ausgebildet sein. Alternativ kann die Kraftfahrzeugleuchte als eine hoch gesetzte dritte Bremsleuchte ausgebildet sein.

Es ist ersichtlich, dass die Erfindung verwirklicht sein kann, indem mindestens eine optisch wirksame Oberfläche eines Lichtleiterelements unabhängig von einer durch Spritzguss hergestellten Partie des Lichtleiterelements hergestellt wird, indem zunächst die mindestens eine optisch wirksame Oberfläche unabhängig von der verbleibenden Partie des Lichtleiterelements, in einer Fein- und Genauigkeit, wie sie im Spritzguss nicht erzeugt werden kann, durch Umformen eines Substrats, vorzugsweise eines Foliensubstrats, besonders bevorzugt einer Folie, insbesondere durch Druckumformen vorzugsweise vermittels Walzen und/oder Pressen und/oder Prägen hergestellt wird, und anschließend das Substrat und die verbleibende Partie des Lichtleiterelements eine stoffschlüssige Verbindung eingehen.

Dabei ist vorgesehen, ein Substrat durch Umformen mit einer später eine optisch wirksame Oberfläche des Lichtleiterelements bildenden Oberfläche zu versehen, wodurch die optisch wirksame Oberfläche unabhängig von der Herstellung der verbleibenden Partie des Lichtleiterelements erzeugt wird. Das Lichtleiterelement ist demnach erst fertig gestellt, wenn das mit der entsprechend durch Umformung erzeugten Oberfläche versehene Substrat stoffschlüssig mit der verbleibenden Partie des Lichtleiterelements verbunden ist.

Die Erfindung kann demnach verwirklicht sein durch getrennte Herstellungsprozesse für mindestens eine zumindest mit einer optisch wirksamen Oberfläche des Lichtleiterelements versehene Partie des Lichtleiterelements und die verbleibende Partie des Lichtleiterelements. Dabei wird die mindestens eine zumindest mit einer optisch wirksamen Oberfläche des Lichtleiterelements versehene Partie des Lichtleiterelements in einem von der Herstellung der verbleibenden Partie des Lichtleiterelements getrennten Herstellungsprozess bereitgestellt, indem wenigstens eine Oberfläche eines transparenten Substrats durch Umformen behandelt wird, wobei eine Oberflächengüte der späteren, nach der Fertigstellung des Lichtleiterelements optisch wirksamen Oberfläche in einer Präzision erhalten wird, die weder durch Spritzguss, noch durch Bedrucken erhalten werden kann. Anschließend, beispielsweise durch Herstellung der verbleibenden Partie des Lichtleiterelements durch Anspritzen an das Substrat, werden die mindestens eine zumindest mit einer optisch wirksamen Oberfläche des Lichtleiterelements versehene Partie des Lichtleiterelements und die verbleibende Partie des Lichtleiterelements stoffschlüssig miteinander verbunden.

Demnach wird zunächst erst die später eine optisch wirksame Oberfläche des fertigen Lichtleiterelements bildende Oberfläche hergestellt und im Anschluss hieran die verbleibende Partie des Lichtleiterelements.

Das Substrat kann nur in einem Bereich des Lichtleiterelements vorgesehen sein, welcher beispielsweise eine Lichtaustrittsfläche des Lichtleiterelements umfasst. Selbstverständlich können mehrere solche Bereiche und/oder mehrere Lichtaustrittsflächen vorgesehen sein.

Vorzugsweise wird das auf zumindest einer Oberfläche per Umformen behandelte Substrat in einem Spritzgusswerkzeug für das mindestens eine oder mehrere Lichtaustrittsflächen aufweisende Lichtleiterelement beispielsweise nur im Bereich der vorgesehenen einen oder mehreren Lichtaustrittsflächen eingelegt und vermittels eines transparenten Kunststoffes, beispielsweise PMMA (Polymethylmethacrylat) für die verbleibende Partie des Lichtleiterelements hinterspritzt.

Vorteile gegenüber dem Stand der Technik ergeben sich unter Anderem durch eine frei von Nachbehandlung kostengünstige Erzielung einer wesentlich feineren Oberflächengüte, als dies mit anderen Herstellungsverfahren für Lichtleiterelemente möglich ist. Hierdurch werden die Nachteile des Standes der Technik aufgehoben und es lässt sich vermittels eines solchen Lichtleiterelements im Vergleich zum Stand der Technik eine wesentlich höhere optische Güte erhalten. Dies ist vor allem dadurch bedingt, dass eine beim Stand der Technik auftretende, jedoch unerwünschte und die optische Güte störende Oberflächenrauigkeit sowohl planer Flächen, als auch der Teilflächen von Lichtauskoppelstrukturen durch Herstellung dieser Oberflächen vermittels Umformen in einem eigenen Prozess eliminiert oder in einer wesentlich höheren Genauigkeit und Feinheit gezielt hergestellt werden kann. Dadurch geht weniger des in das Lichtleiterelement eingekoppelten Lichts unnütz verloren und es wird ein um so größerer Anteil diesen Lichts einer vorgegebenen Lichtverteilung beitragend aus dem Lichtleiterelement wieder ausgekoppelt.

Weitere Vorteile gegenüber dem Stand der Technik ergeben sich dadurch, dass bei idealer Auslegung eines Lichtleiterelements dieses aufgrund seiner durch die Erfindung verbesserten Oberflächengüte exakter einer vorgegebenen Lichtverteilung beitragen kann und dabei durch die Absenkung der Untergrenze für die Feinheit der Oberflächenbeschaffenheit eine höhere optische Güte aufweist.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:

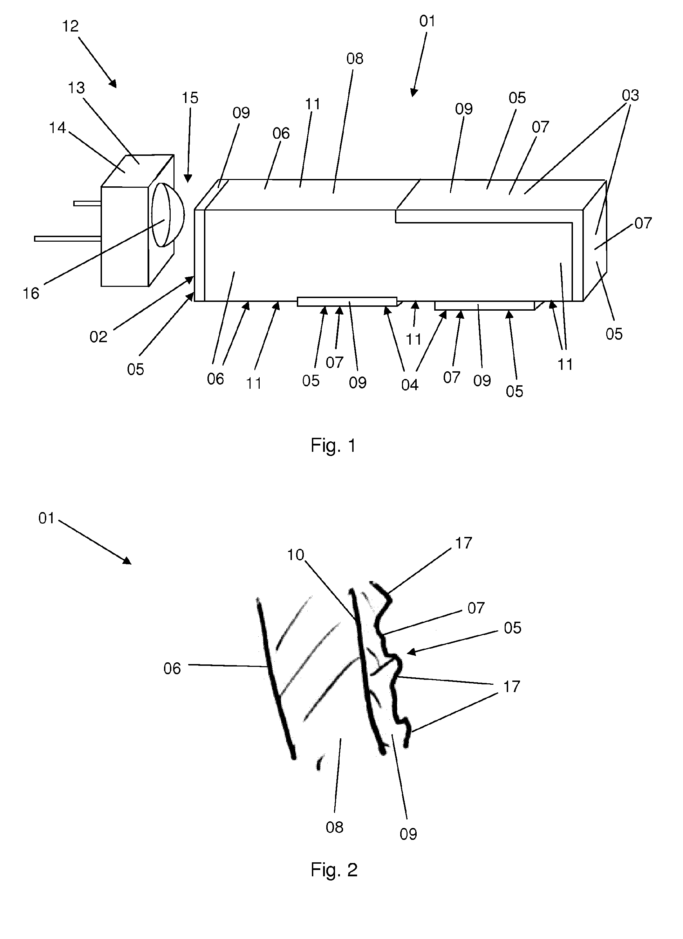

- Fig. 1: ein vorzugsweise für eine Kraftfahrzeugleuchte vorgesehenes Leuchtmittel mit einer Lichtquelle und einem dieser mit seiner Lichteinkoppelfläche zugewandten Lichtleiterelement mit wenigstens einer vermittels mindestens einer durch Umformen behandelten Oberfläche zumindest eines stoffschlüssig mit einer verbleibenden Partie des Lichtleiterelements verbundenen Substrats hergestellten optisch wirksamen Oberfläche.
- Fig. 2: einen Querschnitt durch ein Lichtleiterelement mit wenigstens einer vermittels mindestens einer durch Umformen behandelten Oberfläche zumindest eines stoffschlüssig mit einer verbleibenden Partie des Lichtleiterelements verbundenen Substrats hergestellten optisch wirksamen Oberfläche.

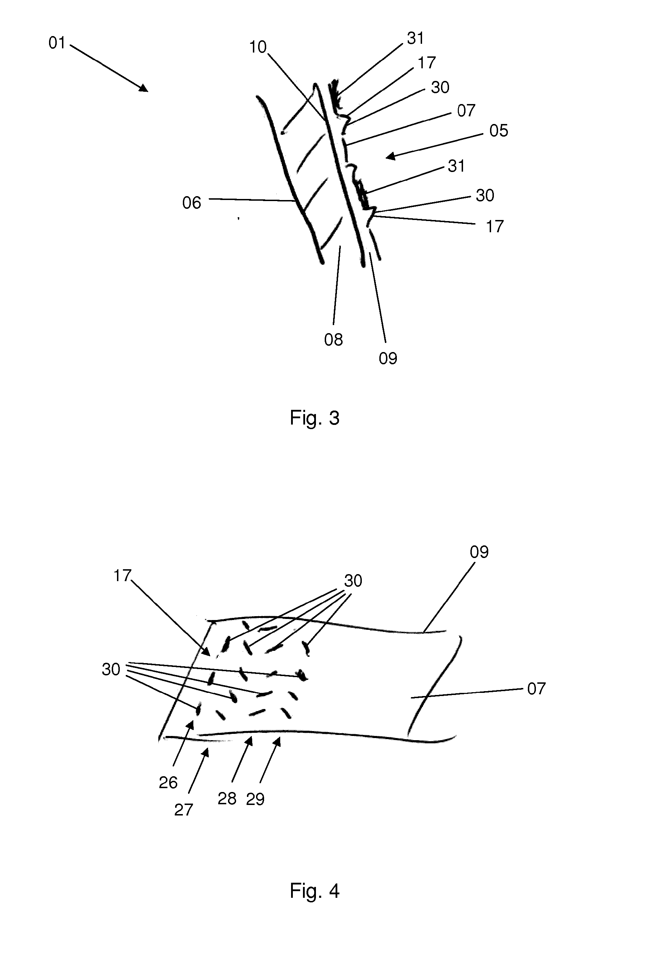

- Fig. 3: einen Querschnitt durch ein Lichtleiterelement mit wenigstens einer vermittels mindestens einer durch Umformen behandelten Oberfläche zumindest eines stoffschlüssig mit einer verbleibenden Partie des Lichtleiterelements verbundenen Substrats hergestellten optisch wirksamen Oberfläche.
- Fig. 4: eine als eine optisch wirksame Oberfläche eines Lichtleiterelements vorgesehene, durch eine Behandlung vermittels Umformung mit abschnittsweise präzise angeordneten Lichtauskoppelstrukturen versehene Oberfläche eines Substrats.

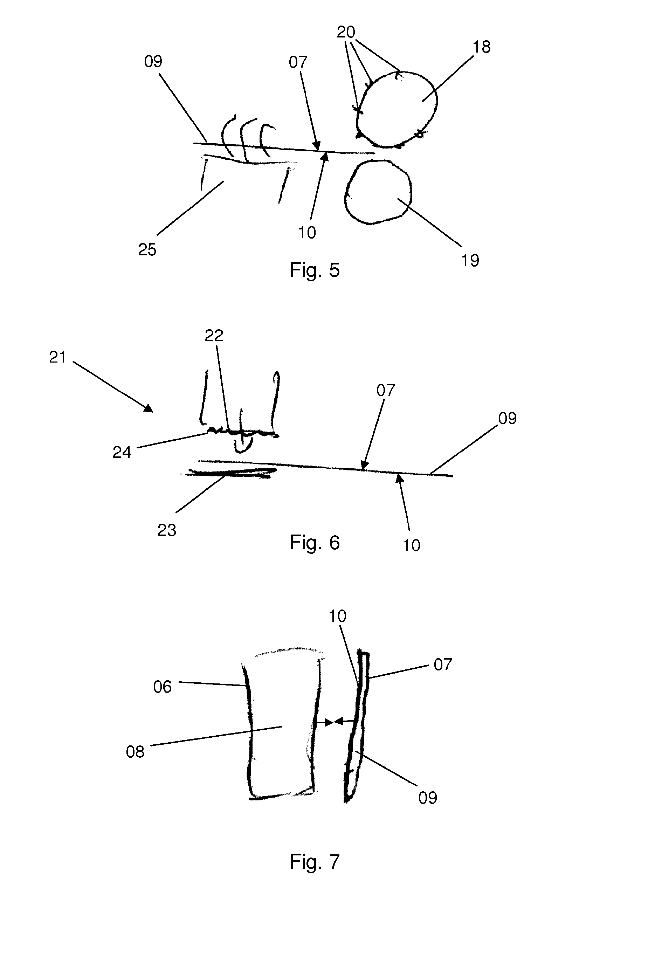

- Fig. 5: einen Verfahrensschritt eines Verfahrens zur Herstellung eines Lichtleiterelements, bei dem eine Oberfläche eines zuvor bereitgestelltes Substrats vermittels einer Behandlung per Druckumformung durch Walzen abschnittsweise mit Lichtauskoppelstrukturen versehen wird und eine gegenüberliegende Oberfläche des Substrats durch die Druckumformung vermittels Walzen frei von Lichtauskoppelstrukturen hergestellt wird.
- Fig. 6: einen Verfahrensschritt eines Verfahrens zur Herstellung eines Lichtleiterelements, bei dem eine Oberfläche eines zuvor bereitgestelltes Substrats vermittels einer Behandlung per Druckumformung durch Pressen und Prägen abschnittsweise mit Lichtauskoppelstrukturen versehen wird und eine gegenüberliegende Oberfläche des Substrats durch die Druckumformung vermittels Pressen frei von Lichtauskoppelstrukturen hergestellt wird.
- Fig. 7: einen Verfahrensschritt eines Verfahrens zur Herstellung eines Lichtleiterelements, bei dem ein Substrat mit mindestens einer in einem vorhergehenden Verfahrensschritt durch Umformung behandelten Oberfläche mit einer verbleibenden Partie des Lichtleiterelements verbunden wird, so dass die durch Umformen behandelte Oberfläche des Substrats zu einer optisch wirksamen Oberfläche des Lichtleiterelements wird.

Ein in den Fig. 1 bis Fig. 4 und Fig. 7 ganz oder in Teilen dargestelltes, beispielsweise flächig oder stabförmig, vorzugsweise beispielsweise in einer Ebene und/oder besonders bevorzugt dreidimensional im Raum gekrümmt verlaufend ausgebildetes Lichtleiterelement 01 weist mindestens eine Lichteinkoppelfläche 02 sowie mindestens eine Lichtaustrittsfläche 03 auf. Darüber hinaus kann das Lichtleiterelement 01 mindestens eine wenigstens einer Lichtaustrittsfläche 03 zugeordnete Lichtumlenkfläche 04 aufweisen.

Demnach kann das Lichtleiterelement 01 mindestens eine Lichteinkoppelfläche 02 sowie mindestens eine von der wenigstens einen Lichteinkoppelfläche 02 verschiedene Lichtaustrittsfläche 03 aufweisen. Darüber hinaus kann das Lichtleiterelement 01 wenigstens eine von der zumindest einen Lichtaustrittsfläche 03 verschiedene Lichtumlenkfläche 04 aufweisen.

Zumindest die mindestens eine Lichteinkoppelfläche 02, die mindestens eine Lichtaustrittsfläche 03, sowie gegebenenfalls die mindestens eine wenigstens einer Lichtaustrittsfläche 03 zugeordnete Lichtumlenkfläche 04 werden durch optisch wirksame Oberflächen 05 des Lichtleiterelements 01 gebildet.

Auch eine oder mehrere verbleibende Oberflächen 06 des Lichtleiterelements 01 können optisch wirksame Oberflächen 05 bilden, sofern diese frei von einer unerwünschten Lichtauskopplung durch Totalreflexion zur Lichtführung im Lichtleiterelement 01 beitragen.

Wenigstens eine optisch wirksame Oberfläche 05 und/oder ein Teil einer solchen ist auf einer Oberfläche 07 eines stoffschlüssig mit einer verbleibenden Partie 08 des Lichtleiterelements verbundenen Substrats 09 ausgebildet.

Das Substrat 09 ist bevorzugt vollflächig stoffschlüssig mit der verbleibenden Partie 08 des Lichtleiterelements 01 verbunden.
Das Substrat 09 kann mit seiner eine optisch wirksame Oberfläche 05 des Lichtleiterelements 01 bildenden Oberfläche 07 erhaben über oder bündig mit einer umliegenden Oberfläche 11 der verbleibenden Partie 08 des Lichtleiterelements 01 ausgeführt sein.

Die wenigstens eine optisch wirksame Oberfläche 05 des Lichtleiterelements 01 bildende Oberfläche 07 des Substrats 09 ist durch Umformung des Substrats 09 bzw. zumindest einer dessen Oberflächen 07, 10 hergestellt.

Durch Umformen, insbesondere durch Druckumformen, wie etwa durch Walzen und/oder Pressen und/oder Prägen, wird eine wesentlich höhere Oberflächengüte erhalten, als beispielsweise durch Spritzguss und/oder Bedrucken überhaupt möglich. Dies liegt daran, dass die Feinheit der Oberflächengüte der beim Spritzguss notwendigen Spritzgussformen durch die Werkzeuge beschränkt ist, mit denen unter vertretbarem Aufwand die Spritzgussformen ausgehoben werden. Zwar besteht grundsätzlich die Möglichkeit, die durch die Werkzeuge verursachte verbleibende Rauhigkeit bzw. mangelnde Feinheit der Beschaffenheit der Oberfläche der Spritzgussformen beispielsweise durch eine Beschichtung zu egalisieren, jedoch sind solche Beschichtungen nicht Abnutzungsbeständig, wodurch sich von Spritzgussteil zu Spritzgussteil dessen Oberflächengüte verschlechtert. Im Rahmen hoher Qualitätsanforderungen, insbesondere im Automobilbereich, ist dies nicht serientauglich, zumal nach etwa einhundert mit einer Spritzgussform hergestellten Spritzgussteilen eine solche Beschichtung abgenutzt ist. Ein weiterer Nachteil ist, dass sich Beschichtungsmaterial aufgrund der Abnutzung in den Spritzgussteilen wieder findet, insbesondere an dessen Oberflächen.

Demgegenüber verbessert die durch Umformung erzielbare höhere Präzision und feinere Beschaffenheit zumindest einer optisch wirksamen Oberfläche 05 des Lichtleiterelements 01 dessen optische Güte maßgeblich.

Das Material des Substrats 09 und das Material der verbleibenden Partie 08 des Lichtleiterelements 01 können gleiche oder unterschiedliche optische Brechungsindizes aufweisen.

Beim Ausgangshalbzeug des Substrats 09 handelt es sich vorzugsweise um dünne Platten und/oder Folien, welche in ihrer flächigen Ausdehnung wesentlich größere Abmessungen aufweisen, als normal hierzu. Ein solches Substrat kann als zweidimensional bezeichnet werden, da es als nennenswerte Oberflächen nur eine Oberseite und Unterseite aufweist. Die Oberseite und Unterseite verbindende Schmalseiten weisen hierbei keine nennenswerte Abmessungen auf.

Die wenigstens eine optisch wirksame Oberfläche 05 des Lichtleiterelements 01 bildende, durch Umformen behandelte Oberfläche 07, 10 des Substrats 09 bildet wenigstens zum Teil:
- mindestens eine eine optische Grenzfläche darstellende Lichteinkoppelfläche 02 und/oder
- mindestens eine eine optische Grenzfläche darstellende Lichtaustrittsfläche 03 und/oder
- mindestens eine wenigstens einer Lichtaustrittsfläche 03 zugeordnete Lichtumlenkfläche 04, welche im Lichtleiterelement 01 geführtes Licht innerhalb des Lichtleiterelements 01 gezielt in einer oder mehreren Richtungen zu wenigstens einer Lichtaustrittsfläche 03 hin umlenkt, so dass in das Lichtleiterelement 01 an dessen mindestens einer Lichteinkoppelfläche 02 von einer Lichtquelle 13 eingekoppeltes Licht an der entsprechenden, zumindest einen der mindestens einen Lichtumlenkfläche 04 zugeordneten Lichtaustrittsfläche 03 gegebenenfalls unter Brechung beim Übergang vom Material des Lichtleiterelements 01 zum umgebenden Medium, beispielsweise zur umgebenden Luft, oder frei von Brechung aus dem Lichtleiterelement 01 ausgekoppelt wird.

Alternativ oder zusätzlich kann die wenigstens eine optisch wirksame Oberfläche 05 des Lichtleiterelements 01 bildende, durch Umformen behandelte Oberfläche 07, 10 des Substrats 09 wenigstens zum Teil eine optisch wirksame Oberfläche 05 bilden, welche frei von einer unerwünschten Lichtauskopplung durch Totalreflexion zur Lichtführung im Lichtleiterelement 01 beiträgt.

Die wenigstens eine optisch wirksame Oberfläche 05 des Lichtleiterelements 01 bildende, durch Umformen behandelte Oberfläche 07, 10 des Substrats 09 kann wie in Fig. 2, Fig. 3, Fig. 4 dargestellt wenigstens zum Teil mit Lichtauskoppelstrukturen 17 versehen sein.

Diese Lichtauskoppelstrukturen 17 können Prismenelemente 30 umfassen.

Das Substrat 09 kann alternativ oder zusätzlich zumindest abschnittsweise mit einer beispielsweise durch Bedrucken und/oder Metallisieren hergestellten Beschichtung 31 versehen sein, beispielsweise um in solchen Abschnitten, die keine optisch wirksame Oberfläche 05 bilden, einen Lichtaustritt aus dem Lichtleiterelement 01 vollständig zu unterbinden.

Das Substrat 09, ebenso wie eine durch Umformung hergestellte, eine optisch wirksame Oberfläche 05 des Lichtleiterelements 01 bildende Oberfläche 07, 10 ist hierbei zunächst transparent, bevor abschnittsweise eine Beschichtung aufgetragen wird.

Im Gegensatz zum Umformen stellt das Bedrucken bzw. Aufdrucken ebenso wie das Metallisieren z.B. einer den Lichtaustritt beschränkenden Schablone ein Beschichtungsverfahren dar.

Das Substrat 09 kann in Partien des Lichtleiterelements, die frei von einer durch eine Oberfläche 07, 10 des Substrats 09 bereitgestellte optisch wirksame Oberfläche 05 ausgeführt sein sollen, zumindest teilweise ausgestanzt sein.

Mindestens ein Lichtleiterelement 01 mit mehreren, zumindest:
- mindestens eine Lichteinkoppelfläche 02,
- mindestens eine Lichtaustrittsfläche 03, sowie gegebenenfalls
- mindestens eine wenigstens einer Lichtaustrittsfläche 03 zugeordnete Lichtumlenkfläche 04
bildenden optisch wirksamen Oberflächen 05 kann Teil eines in Fig. 1 dargestellten Leuchtmittels 12 sein, welches neben dem Lichtleiterelement 01 wenigstens eine zumindest einer Lichteinkoppelfläche 02 zugeordnete Lichtquelle 13 umfasst. Das von der Lichtquelle 13 ausgestrahlte Licht wird via der Lichteinkoppelfläche 02 in das Lichtleiterelement 01 eingekoppelt, darin vorzugsweise durch Totalreflexion geführt, bis es an einer Lichtaustrittsfläche 03 aus dem Lichtleiterelement 01 austritt. Vorher kann das Licht an einer Lichtumlenkfläche 04 in einer solchen Richtung zur Lichtaustrittsfläche 03 hin umgelenkt werden, dass es gegebenenfalls unter Brechung beim Übergang vom Material des Lichtleiterelements 01 bzw. eines die Lichtaustrittsfläche 03 bildenden Substrats 09 aus dem Lichtleiterelement 01 austreten kann.

Bei mindestens einer Lichtquelle 13 handelt es sich bevorzugt um wenigstens eine LED 14.

Das Lichtleiterelement 01 und die mindestens eine Lichtquelle 13 können miteinander verbunden sein, beispielsweise indem das Lichtleiterelement 01, bevorzugt mit dessen verbleibender Partie 08, im Spritzguss unmittelbar an eine als LED 14 ausgeführte Lichtquelle 11 angespritzt ist. Hierdurch wird ein optischer Übergang zwischen Lichtquelle 11 und Lichtleiterelement 01 vermieden. Dies verbessert die optische Güte im Vergleich zu einer Ausführung mit einem Luftspalt 15 zwischen Lichtquelle 13 und Lichtleiterelement 01. Die Verbesserung wird einerseits durch den Verzicht auf den Luftspalt 15 einhergehend mit dem Entfall einer oder - sofern die Lichtquelle 13 mit einer Primäroptik 16 versehen ist - zweier optischer Grenzflächen, und andererseits durch die Vermeidung von Ausrichtungsfehlern zwischen Lichtquelle 13 und Lichtleiterelement 01 erhalten.

Die Lichteinkoppelfläche 02 wird in diesem Fall von der oder den jeweils an eine Lichtquelle 13 unmittelbar anstoßenden Oberflächenpartien des Lichtleiterelements 01 umfasst.

Ein Verfahren zur Herstellung eines zuvor beschriebenen Lichtleiterelements 01 sieht nach der Bereitstellung eines bevorzugt transparenten Substrats 09 in einem ersten Verfahrensschritt in einem zweiten Verfahrensschritt eine Behandlung wenigstens einer Oberfläche 07, 10 des Substrats 09 durch Umformung des Substrats 09 vor.

Die Behandlung wenigstens einer Oberfläche 07, 10 des Substrats 09 vermittels Umformung sieht bevorzugt eine Druckumformung vor.

Bei der Behandlung durch Umformen können zumindest abschnittsweise Lichtauskoppelstrukturen 17 auf eine oder mehrere behandelte Oberflächen 07, 10 des Substrats 09 geprägt werden.

Das Umformen vermittels Druckumformung kann beispielsweise wie in Fig. 5 dargestellt durch Walzen erfolgen. Hierbei wird das bereitgestellte Substrat 09 zu dessen Behandlung zwischen mindestens zwei Walzen 18, 19 durchgeführt. Dabei kann eine Oberfläche 07 des Substrats 09 oder es können beide Oberflächen 07, 10 des Substrats 09 gleichzeitig mit Lichtauskoppelstrukturen 17 versehen werden, beispielsweise indem zumindest eine Walze 18 mit Lichtauskoppelstrukturen 17 auf wenigstens eine Oberfläche 07, 10 des Substrats 09 beispielsweise prägenden Walzenoberflächenpartien 20 versehen ist.

Das Umformen vermittels Druckumformung kann beispielsweise wie in Fig. 6 dargestellt alternativ oder zusätzlich durch Pressen erfolgen. Hierbei wird das bereitgestellte Substrat 09 zu dessen Behandlung durch mindestens eine Presse 21 durchgeführt. Auch hierbei kann eine Oberfläche 07 des Substrats 09 oder es können beide Oberflächen 07, 10 des Substrats 09 gleichzeitig mit Lichtauskoppelstrukturen 17 versehen werden, beispielsweise indem zumindest eine Pressfläche 22, 23 mit Lichtauskoppelstrukturen 17 auf wenigstens eine Oberfläche 07, 10 des Substrats 09 beispielsweise prägenden Pressflächenpartien 24 versehen ist.

Grundsätzlich können eine oder mehrere Oberflächenpartien eines oder mehrerer bei der Behandlung des Substrats 09 zumindest eine Oberfläche 07, 10 des Substrats 09 umformenden Umformungswerkzeuge, beispielsweise wie in Fig. 5 dargestellt eine oder beide der Walzen 18, 19, und/oder wie in Fig. 6 dargestellt die Presse 21 bzw. eine oder mehrere deren Pressflächen 22, 23 wärmebeaufschlagt, beispielsweise beheizt sein.

Hierzu ergänzend oder anstelle einer Wärmebeaufschlagung eines Umformwerkzeugs kann das Substrat 09 zumindest auf einer einer umformenden Behandlung zu unterziehenden Oberfläche 07, 10 vermittels einer hierfür vorgesehenen Wärmebeaufschlagungseinrichtung 25 wärmebeaufschlagt werden, wie in Fig. 5 dargestellt, noch bevor es vom Umformwerkzeug behandelt wird. Denkbar ist beispielsweise eine Warm- bzw. Heißluftbeaufschlagung der entsprechenden mindestens einen Oberfläche 07, 10 des Substrats 09 und/oder eine Wärmebeaufschlagung vermittels Infrarotstrahlung vor dem Umformen und/oder zwischen zwei aufeinanderfolgenden Behandlungen zur Umformung.

Insbesondere beim Umformen durch Walzen und/oder Pressen können Lichtauskoppelstrukturen 17 verwirklicht werden, wie sie im Spritzguss nicht möglich sind. So kann beispielsweise vermittels Walzen 18, 19 von denen beispielsweise eine mit Lichtauskoppelstrukturen 17 prägenden Walzenoberflächenpartien 20 versehen ist, Lichtauskoppelstrukturen 17 wie beispielsweise in Fig. 4 derart angeordnet hergestellt werden, wie sie in ihrer Fein- und Mikrostrukturierung insbesondere im Spritzguss und/oder durch Beschichten, wie etwa Bedrucken, nicht hergestellt werden können. So können beispielsweise wie in Fig. 4 dargestellt Lichtauskoppelstrukturen 17 mit in benachbarten Reihen 26, 27, 28, 29 unterschiedlich angestellten Prismenelementen 30 unter geringem Aufwand auf zumindest einer Oberfläche 07, 10 des Substrats 09 hergestellt werden, welche erst im Anschluss an deren Herstellung in einem dritten Verfahrensschritt in ein Lichtleiterelement 01 eingebracht werden.

In einem solchen, in Fig. 7 angedeuteten dritten Verfahrensschritt erfolgt ein stoffschlüssiges Verbinden des Substrats 09 mit mindestens einer dessen Oberflächen 07, 10 mit der verbleibenden Partie 08 des Lichtleiterelements 01 zum fertigen Lichtleiterelement 01.

Sofern nur eine Oberfläche 07 des Substrats 09 durch Umformung behandelt wurde, kann vorgesehen werden, dass das Substrat 09 in diesem dritten Verfahrensschritt mit dessen unbehandelt verbliebener Oberfläche 10 stoffschlüssig mit der verbleibenden Partie 08 des Lichtleiterelements 01 verbunden wird. Alternativ kann dies auch mit der behandelten Oberfläche 07 geschehen.

Das stoffschlüssige Verbinden erfolgt dabei vorzugsweise frei von Einschlüssen, wie etwa Lufteinschlüssen, derart, dass das Substrat 09 mit seiner durch Umformung hergestellten Oberfläche 07, 10 an derjenigen bzw. denjenigen Stellen zu liegen kommt, an der bzw. an denen eine oder mehrere optisch wirksame Oberflächen 05 des fertigen Lichtleiterelements 01 vorgesehen sind.

Das stoffschlüssige Verbinden des Substrats 09 mit der verbleibenden Partie 08 des Lichtleiterelements 01 kann beispielsweise durch
- Hinterspritzung des Substrats 09 mit der verbleibenden Partie 08 des Lichtleiterelements 01 vermittels lage- und positionsrichtigem Einbringen des Substrats 09 in ein Spritzgusswerkzeug und Hinterspritzen des Substrats 09 mit der verbleibenden Partie 08 des Lichtleiterelements 01, oder
- lage- und positionsrichtiges Auflaminieren des Substrats 09 auf die verbleibende Partie 08 des Lichtleiterelements 01, oder
- lage- und positionsrichtiges Aufkleben des Substrats 09 auf die verbleibende Partie 08 des Lichtleiterelements 01, oder
- lage- und positionsrichtige thermomechanische Fixierung des Substrats 09 auf die verbleibende Partie 08 des Lichtleiterelements 01
erfolgen.

Zur lage- und positionsgenauen Ausrichtung des Substrats 09 während des dritten Verfahrensschritts kann das Substrat beispielsweise im Spritzgusswerkzeug und/oder während des Auflaminierens und/oder während des Klebens und/oder während der thermomechanischen Fixierung beispielsweise mittels Vakuum festgehalten werden.

In einem oder mehreren beispielsweise getrennt vor oder nach der Behandlung durch Umformen und in jedem Fall vor dem stoffschlüssigen Verbinden des Substrats 09 mit der verbleibenden Partie 08 des Lichtleiterelements 01 stattfindenden Verfahrensschritten kann das Substrat 09:
- zumindest abschnittsweise ausgestanzt, und/oder
- zumindest abschnittsweise mit einer Beschichtung 31 versehen werden.

Wichtig ist hervorzuheben, dass um eine Lichtverteilung beispielsweise gemäß der gesetzlichen Vorgaben und/oder ein möglichst homogenes Erscheinungsbild aus verschiedenen Betrachtungswinkeln zu erreichen, Lichtleiterelemente zumeist auf Totaleflexion basierende Lichtauskoppelstrukturen und/oder streuende Oberflächen beispielsweise in Form einer Narbung besitzen. Die Herstellung dieser Lichtauskoppelstrukturen im Spritzgusswerkzeug sowie deren Abbildung im Kunststoffteil sind bezüglich Größe, Geometrie, Präzision oder Standzeit durch das Fertigungsverfahren der Spritzgusswerkzeuge - hierbei handelt es sich für Spritzgusswerkzeuge aus Stahl um Fräsen, Auswaschen des Werkzeugs - sowie den Spritzgussprozess stark eingeschränkt. Das Einbringen von Lichtauskoppelstrukturen mittels Fräsen, Senkerodieren in Spritzgusswerkzeuge aus Stahl impliziert deutliche Einschränkungen der Lichtauskoppelstrukturen und der Oberflächenqualität - wie etwa der Rauheit - der Lichtauskoppelstrukturen. Zudem werden die Geometrien im Spritzgusswerkzeug über die Lebensdauer des Spritzgusswerkzeugs ausgewaschen. Eine verbesserte Oberflächenqualität kann nur durch Diamant-Schaben erreicht werden, welches die umsetzbaren Geometrien jedoch stark einschränkt. Galvano-Einsätze, basierend auf Fräs- und Drehprozessen mit Diamant-Werkzeugen sind darüber hinaus kostenintensiv und besitzen eine deutlich verringerte Standzeit im Vergleich zu den Stahlwerkzeugen. Unabhängig vom Werkzeugeinsatz sind im Spritzgussprozess die feinen Strukturen sauber abzuformen. Dies stellt insbesondere für dickwandige Lichtleiterelemente eine Herausforderung dar, da die Schwindung des Werkstücks der Oberflächengüte sowie der Oberflächentreue entgegenwirkt. In der Praxis werden daher für dickwandigere Lichtleiterelemente oft zeitaufwändige und teure zwei- oder mehrkomponenten Spritzgussverfahren eingesetzt.

Zur Behebung der geschilderten Nachteile sieht ein wesentlicher Gedanke der Erfindung vor, die Herstellung der beispielsweise Lichtauskoppelstrukturen bildenden Mikrooptiken in Form beispielsweise einer Auskoppeloptik oder streuende Optik aufweisenden, optisch wirksamen Oberflächen eines Lichtleiterelements vom Herstellverfahren der den makroskopischen Grundkörper des Lichtleiterelements bildenden, verbleibenden Partie des Lichtleiterelements technologisch zu trennen.

Dies kann beispielsweise durch Hinterspritzen von zuvor durch Umformen mit Mikrooptiken versehenen Folien erreicht werden. Hierbei werden zur Herstellung mikrostrukturierte Folien in das Spritzgusswerkzeug eingelegt und hinterspritzt. Alternativ können mikrostrukturierte Folien auf den Grundkörper beispielsweise laminiert werden.

Durch Trennung der Herstelltechnologien für die optisch wirksame Oberfläche und den Grundkörper können sowohl mikrostrukturierte Folien als auch holographische Folien auf den spritzgussbasiert hergestellten Grundkörper des Lichtleiterelements appliziert werden. Geometrische Strukturen gegebenenfalls vorgesehener Lichtauskoppelelemente können dabei durch das gewählte Herstellverfahren durch Umformung wesentlich geringere und präzisere Geometrien beinhalten als mit einem Spritzgussverfahren hergestellt werden kann. Einfallstellen des Grundkörpers etwa durch Schwindung haben keinen Einfluss auf die Qualität von Auskoppeloptiken oder Oberflächentextur auf den so hergestellten optisch wirksamen Oberflächen.

Mit anderen Worten sieht die Erfindung eine Trennung der Herstellung mindestens einer optisch wirksamen Oberfläche von Lichtleiterelementen von deren Grundkörper vor. Dies wird durch die Behandlung einer oder mehrerer, eine optisch wirksame Oberfläche eines Lichtleiterelements bildender, Oberfläche eines Substrats erhalten, welches anschließend in eine Spritzgussform eingelegt und nachfolgend mit einer den Grundkörper bildenden verbleibenden Partie des Lichtleiterelements beispielsweise hinterspritzt wird, um ein einstückiges Lichtleiterelement zu erhalten.

Durch die getrennte Umformung des beispielsweise als Folie ausgebildeten Substrats kann eine höchst präzise mikrostrukturierte Folie erhalten werden.

Der Erfindung liegt die Überlegung zu Grunde, getrennte Prozesse, von denen ein erster zur kostengünstigen Erzeugung höchstwertiger Oberflächenfeinheiten bzw. -güten geeignet ist, und ein zweiter erprobt und damit kostengünstig zur Herstellung von Lichtleiterelementekörpern geeignet ist, vorzusehen. Der erste Prozess erfolgt dabei unabhängig vom zweiten Prozess.

Hierdurch wird die Güte zumindest einer optisch wirksamen Oberfläche eines Lichtleiterelements in dem ersten Prozess festgelegt, bevor dessen Körper hergestellt und damit das Lichtleiterelement erst fertiggestellt wird.

Mit anderen Worten erfolgt die Herstellung zumindest einer Oberfläche eines Lichtleiters oder Optikelements in dem ersten Prozess, bevor durch Herstellung dessen Körpers das Lichtleiterelement erst hergestellt wird.

Die Erfindung ist insbesondere im Bereich der Herstellung von Lichtleiterelementen, wie sie beispielsweise in Verbindung mit Leuchtmitteln für Kraftfahrzeugleuchten vorgesehen sein können, gewerblich anwendbar.

### Bezugszeichenliste

- 01: Lichtleiterelement
- 02: Lichteinkoppelfläche
- 03: Lichtaustrittsfläche
- 04: Lichtumlenkfläche
- 05: optisch wirksame Oberfläche
- 06: verbleibende Oberfläche (des Lichtleiterelements)
- 07: Oberfläche (des Substrats)
- 08: verbleibende Partie (des Lichtleiterelements)
- 09: Substrat
- 10: Oberfläche (des Substrats)
- 11: umliegende Oberfläche (des Lichtleiterelements)
- 12: Leuchtmittel
- 13: Lichtquelle
- 14: LED
- 15: Luftspalt
- 16: Primäroptik
- 17: Lichtauskoppelstruktur
- 18: Walze
- 19: Walze
- 20: Walzenoberflächenpartie
- 21: Presse
- 22: Pressfläche
- 23: Pressfläche
- 24: Pressflächenpartie
- 25: Wärmebeaufschlagungseinrichtung
- 26: Reihe
- 27: Reihe
- 28: Reihe
- 29: Reihe
- 30: Prismenelement
- 31: Beschichtung

## Patentansprüche

1. Lichtleiterelement (01) mit jeweils einer oder mehreren durch eigens hierfür vorgesehene optisch wirksame Oberflächen (05) gebildeten:
- Lichteinkoppelflächen (02) und
- Lichtaustrittsflächen (03)
sowie gegebenenfalls einer oder mehreren, zumindest einer Lichtaustrittsfläche (03) zugeordneten Lichtumlenkflächen (04), wobei wenigstens eine optisch wirksame Oberfläche (05) und/oder ein Teil einer solchen ist auf einer Oberfläche (07, 10) wenigstens eines stoffschlüssig mit einer verbleibenden Partie (08) des Lichtleiterelements (01) verbundenen Substrats (09) ausgebildet ist,
**dadurch gekennzeichnet,**
**dass** die wenigstens eine optisch wirksame Oberfläche (05) des Lichtleiterelements (01) bildende Oberfläche (07, 10) des Substrats (09) durch Umformung des Substrats (09) hergestellt ist.

2. Lichtleiterelement nach Anspruch 1,
**dadurch gekennzeichnet,**
**dass** die wenigstens eine optisch wirksame Oberfläche (05) des Lichtleiterelements (01) bildende, durch Umformen hergestellte Oberfläche (07, 10) des Substrats (09) wenigstens zum Teil:
- mindestens eine Lichteinkoppelfläche (02) und/oder
- mindestens eine Lichtaustrittsfläche (03) und/oder
- mindestens eine wenigstens einer Lichtaustrittsfläche (03) zugeordnete Lichtumlenkfläche (04) und/oder
- eine optisch wirksame Oberfläche, welche frei von einer unerwünschten Lichtauskopplung durch Totalreflexion zur Lichtführung im Lichtleiterelement (01) beiträgt,
bildet.

3. Lichtleiterelement nach Anspruch 1 oder 2,
**dadurch gekennzeichnet,**
**dass** die wenigstens eine optisch wirksame Oberfläche (05) des Lichtleiterelements (01) bildende, durch Umformen hergestellte Oberfläche (07, 10) des Substrats (09) wenigstens zum Teil mit Lichtauskoppelstrukturen (17) versehen ist.

4. Lichtleiterelement nach Anspruch 1, 2 oder 3,
**dadurch gekennzeichnet,**
**dass** das Substrat (09) zumindest abschnittsweise mit einer Beschichtung (31) versehen ist.

5. Lichtleiterelement nach Anspruch 4,
**dadurch gekennzeichnet,**
**dass** die Beschichtung (31) durch Bedrucken und/oder Metallisieren hergestellt ist.

6. Verfahren zur Herstellung eines Lichtleiterelements (01) nach einem der vorhergehenden Ansprüche,
**gekennzeichnet durch** die Verfahrensschritte:
- Bereitstellung des Substrats (09),
- Behandlung wenigstens einer Oberfläche (07, 10) des Substrats (09) **durch** Umformung des Substrats (09),
- stoffschlüssiges Verbinden des Substrats (09) mit der verbleibenden Partie (08) des Lichtleiterelements (01).

7. Verfahren nach Anspruch 6,
**dadurch gekennzeichnet,**
**dass**, sofern nur eine Oberfläche (07) des Substrats (09) durch Umformung behandelt wurde, das Substrat (09) mit dessen unbehandelt verbliebener Oberfläche (10) stoffschlüssig mit der verbleibenden Partie (08) des Lichtleiterelements (01) verbunden wird.

8. Verfahren nach Anspruch 6 oder 7,
**dadurch gekennzeichnet,**
**dass** die Behandlung wenigstens einer Oberfläche (07, 10) des Substrats (09) durch Umformung des Substrats (09) durch Druckumformung, bevorzugt durch Walzen und/oder Pressen und/oder Prägen erfolgt.

9. Verfahren nach Anspruch 6, 7 oder 8,
**dadurch gekennzeichnet,**
**dass** durch die Behandlung vermittels Umformen die als optisch wirksame Oberfläche (05) des Lichtleiterelements (01) vorgesehene Oberfläche (07, 10) des Substrats (01) zumindest abschnittsweise mit Lichtauskoppelstrukturen (17) versehen wird.

10. Verfahren nach einem der Ansprüche 6 bis 9,
**dadurch gekennzeichnet,**
**dass** das stoffschlüssige Verbinden des Substrats (09) mit der verbleibenden Partie (08) des Lichtleiterelements (01) durch:
- Hinterspritzung des Substrats (09) mit der verbleibenden Partie (08) des Lichtleiterelements (01) vermittels lage- und positionsrichtiges Einbringen des Substrats (09) in ein Spritzgusswerkzeug, und Hinterspritzen des Substrats (09), oder
- Auflaminieren des Substrats (09) auf die verbleibende Partie (08) des Lichtleiterelements (01), oder
- Aufkleben des Substrats (09) auf die verbleibende Partie (08) des Lichtleiterelements (01), oder
- thermomechanische Fixierung
erfolgt.

11. Verfahren nach einem der Ansprüche 6 bis 10,
**dadurch gekennzeichnet,**
**dass** das Substrat (09) vor oder nach der Behandlung durch Umformen
- zumindest abschnittsweise ausgestanzt wird, und/oder
- zumindest abschnittsweise mit einer Beschichtung (31) versehen wird.

12. Leuchtmittel (12) umfassend mindestens ein Lichtleiterelement (01) mit zumindest wenigstens einer Lichtaustrittsfläche (03) und mindestens einer Lichteinkoppelfläche (02) sowie zumindest eine letzterer zugeordneten Lichtquelle (13),
**gekennzeichnet durch**
ein Lichtleiterelement (01) nach einem der Ansprüche 1 bis 5.

13. Leuchtmittel nach Anspruch 12,
**gekennzeichnet durch**
wenigstens eine LED (14) als mindestens eine Lichtquelle (13).

14. Leuchtmittel nach Anspruch 13,
**dadurch gekennzeichnet,**
**dass** das Lichtleiterelement (01) und die mindestens eine LED (14) bevorzugt durch Spritzgießen miteinander verbunden sind.

15. Kraftfahrzeugleuchte mit einem von einem Leuchtengehäuse und einer Lichtscheibe umschlossenen Leuchteninnenraum und mindestens einem in dem Leuchteninnenraum beherbergten Leuchtmittel (12) zur Erfüllung mindestens einer Lichtfunktion der Kraftfahrzeugleuchte, wobei das Leuchtmittel (12) ein Lichtleiterelement (01) mit mindestens einer Lichteinkoppelfläche (02) und mindestens einer Lichtaustrittsfläche (03) sowie mindestens eine der mindestens einen Lichteinkoppelfläche (02) zugeordnete Lichtquelle (13) umfasst,
**gekennzeichnet durch**
mindestens ein Leuchtmittel (12) nach Anspruch 12, 13 oder 14.
